# DEMANDE DE BREVET EUROPEEN

(11) **EP 2 706 242 A1**
(43) Date de publication de la demande: **12.03.2014**
(21) Numéro de dépôt: 12183813.0
(22) Date de dépôt: 11.09.2012
(51) Int. Cl.: F04D 29/32, F01D 5/30, F01D 5/24

(54) **Fixation d'aubes sur un tambour de compresseur axial**

(71) Demandeur: Techspace Aero S.A., 4041 Herstal (Milmort) (BE)
(72) Inventeur: Englebert, Eric, 4530 Villers-le-Bouillet (BE)
(74) Mandataire: Lecomte & Partners

(57) **Abrégé**

L'invention a trait à un design d'aubes rotoriques (12) de compresseur de turbomachine axiale (2), plus particulièrement à la fixation des aubes (12) au rotor (4). Les aubes (12) comprennent une partie aérodynamique et une plateforme (14) de fixation au rotor (4). La plateforme (14) comprend, suivant la direction principale de l'aube, une première portion formant une surface de délimitation de la veine fluide et contournant les surfaces aérodynamiques ; et une deuxième portion située sous la première portion par rapport aux surfaces aérodynamiques et configurée pour pouvoir coopérer avec la face intérieure d'une paroi (18) du rotor (4) située autour d'un orifice dudit rotor en vue de sa fixation.

## Description

### Domaine technique

L'invention a trait à des aubes rotoriques de turbomachine axiale, plus particulièrement de compresseur de turbomachine axiale. L'invention a trait à la fixation de ces aubes au rotor de la turbomachine. L'invention a trait également à un rotor de turbomachine configuré pour recevoir lesdites aubes.

### Technique antérieure

Le document de brevet US 3,385,512 A divulgue un rotor aubagé de compresseur de turbomachine axiale. Le rotor comprend un tambour supportant plusieurs rangées d'aubes. Le tambour comprend une gorge de montage par rangée d'aubes. Plusieurs aubes sont disposées sur un support commun formant un segment. Ce dernier est fixé au rotor par insertion dans la gorge correspondante du tambour. Le support comprend sur sa face inférieure, c'est-à-dire opposée aux aubes proprement dites, une nervure massive apte à coopérer par insertion dans la gorge du tambour. La nervure comprend sur chacune de ses deux faces opposées une rainure. La gorge du tambour comprend deux lames ressort s'étendant de manière circonférentielle dans des rainures respectives de la gorge du tambour. Lors de l'insertion du support commun à plusieurs aubes, la face frontale de la nervure comprend des surfaces inclinées aptes à venir en contact avec les lames et à glisser le long de celles-ci de manière à les repousser dans leurs rainures respectives contre des efforts élastiques générés par leur déplacement. Dès que les rainures latérales de la nervure sont en face des lames, ces dernières peuvent alors y pénétrer sous l'effort élastique exercé par elles. Les lames, une fois en place, sont alors à cheval entre les rainures correspondantes du support d'aubes et du tambour, assurant ainsi la fixation des aubes au rotor. Ce dispositif de fixation est intéressant mais présente certains inconvénients. Il requiert en effet une certaine massivité du support et du tambour, ce qui nuit grandement à la masse résultante de la turbomachine et, de manière plus importante, augmente fortement les efforts centrifuges, ce qui limite le diamètre et la vitesse de rotation maximale du tambour.

Le document de brevet US 2,944,326 A divulgue une technique de fixation d'aubes à un rotor de compresseur de turbomachine axiale. Les aubes ont une plateforme de taille réduite et dont la section transversale présente un profil en forme de coin. Une rainure est formée par forgeage sur chaque face latérale de la plateforme. La paroi du rotor comprend une ouverture par aube, le profil de l'ouverture correspondant à celui de la plateforme de l'aube. Chaque aube est ensuite insérée dans un orifice du rotor dont elle est empêchée de sortir suivant une direction en raison du profil conique ou en forme de coin de la plateforme et de l'orifice la recevant. Des outils de mise en pression, tels qu'un poinçon et une matrice, sont ensuite utilisés pour exercer une pression importante sur la face du rotor directement voisine des bords de l'orifice correspondants aux rainures latérales de la plateforme. L'objectif de cette opération est de repousser de la matière du rotor formant l'orifice vers l'intérieur des rainures latérales de la plateforme en vue d'assurer sa tenue notamment dans le sens opposé à celui mentionné précédemment. L'aube est ainsi tenue de manière fiable dans les deux sens de la direction radiale du rotor. Ce dispositif de fixation est intéressant mais présente certains inconvénients. En effet, il requiert une épaisseur importante du rotor à l'endroit de fixation des aubes. Le principe de montage des aubes avec une plateforme de profil conique ne peut fonctionner qu'avec une certaine épaisseur de matière. Ceci est également vrai pour pouvoir repousser de la matière dans une rainure latérale. Cette méthode de fixation n'est donc pas adaptée à des tambours légers constitués essentiellement d'une paroi mince formant le voile du tambour.

Le document de brevet US 2,685,405 A divulgue un rotor aubagé de compresseur axial, dont les aubes sont creuses et en communication fluidique avec le rotor. Chaque aube comprend une plateforme formant une gorge de montage. Le rotor est constitué de plusieurs tronçons assemblés les uns aux autres. Le montage des aubes sur le rotor est assuré par deux anneaux jointifs pour chaque rangée d'aubes. Chacun de ces deux anneaux comprend un bord avec des découpes correspondant essentiellement à la moitié correspondante du profil de la gorge de montage des aubes. Les gorges des aubes sont ainsi prises en sandwich entre deux anneaux de montage, ces derniers étant fixés mécaniquement au reste du rotor. Ce type de rotor est destiné à mettre en communication fluidique des étages rotoriques. Tout comme pour les enseignements détaillés précédemment, ce type de montage impose une massivité importante. Il requiert de plus la mise en oeuvre de nombreuses pièces et un effort d'assemblage important.

### Résumé de l'invention

### Problème technique

L'invention a pour objectif de proposer une fixation des aubes à un rotor de turbomachine axiale, qui soit simple et légère. De manière plus particulière, l'invention a pour objectif de proposer une fixation légère et simple des aubes à un tambour de compresseur.

### Solution technique

L'invention a pour objet une aube rotorique de turbomachine axiale, comprenant : une plateforme de fixation au rotor ; deux surfaces aérodynamiques opposées l'une à l'autre et s'étendant depuis la plateforme suivant une direction principale de l'aube ; la plateforme comprenant, suivant la direction principale de l'aube, une première portion formant une surface de délimitation de la veine fluide et contournant les surfaces aérodynamiques ; et une deuxième portion située sous la première portion par rapport aux surfaces aérodynamiques et destinée à la fixation de l'aube ; remarquable en ce que la deuxième portion de la plateforme est configurée pour pouvoir coopérer avec la face intérieure d'une paroi du rotor située autour d'un orifice dudit rotor en vue de sa fixation.

Selon un mode avantageux de l'invention, la deuxième portion de la plateforme est configurée pour pouvoir coopérer directement et/ou indirectement avec des portions de la face intérieure de la paroi du rotor situées de part et d'autre, suivant une direction circonférentielle, de l'orifice.

Selon un mode avantageux de l'invention, la deuxième portion forme un ou plusieurs épaulements débordant de la surface de la première portion.

Selon un mode avantageux de l'invention, la deuxième portion s'étend au moins essentiellement parallèlement à la première portion et déborde de la surface de ladite portion afin de former un épaulement à chacun de ses bords.

Selon un mode avantageux de l'invention, la deuxième portion fait saillie depuis la face inférieure de la première portion et comprend un moyen de rétention, tel qu'un orifice préférentiellement orienté selon la direction circonférentielle du rotor, apte à engager mécaniquement avec un moyen de fixation allongé destiné à venir en contact avec la surface intérieure de la paroi.

Selon un mode avantageux de l'invention, la surface inférieure de la première portion contourne la deuxième portion et forme une surface d'appui de la plateforme sur une surface correspondante de la paroi du rotor.

L'invention a également pour objet un rotor aubagé de turbomachine axiale, remarquable en ce que les aubes sont conformes à l'invention.

Selon un mode avantageux de l'invention, le rotor comprend une portion de paroi annulaire pourvue d'une rangée d'orifices de montage des aubes, la portion de paroi étant préférentiellement d'un seul tenant.

Selon un mode avantageux de l'invention, la structure du rotor est essentiellement constituée d'une paroi formant un voile circulaire, la portion de paroi annulaire étant surélevée par rapport au voile directement en amont et/ou en aval de ladite portion de paroi annulaire, ladite portion de paroi annulaire correspondant préférentiellement à une seule rangée d'aube et le voile comprenant préférentiellement au moins une nervure annulaire apte à coopérer de manière essentiellement étanche avec la surface intérieure d'une virole interne d'un étage d'aubes statoriques.

Selon un mode avantageux de l'invention, la paroi comprend au moins une portion de liaison s'étendant majoritairement radialement entre la paroi formant le voile et la portion de paroi annulaire.

Selon un mode avantageux de l'invention, les aubes sont conformes à l'une des revendications 3 et 4, la forme des orifices de montage de la portion de paroi annulaire correspond à celle de la première portion de la plateforme des aubes, et les surfaces de délimitation de la veine fluide de ladite portion affleurent la surface extérieure de la portion de paroi annulaire.

Selon un mode avantageux de l'invention, le rotor comprend des moyens de pression agissant sur la face intérieure des plateformes des aubes en vue de les maintenir en place, lesdits moyens comprenant préférentiellement au moins un jonc et/ou un feuillard disposé(s) de manière annulaire.

Selon un mode avantageux de l'invention, le rotor comprend des moyens d'adhésion, tels que de la colle, entre les épaulements des plateformes des aubes et la paroi du rotor.

Selon un mode avantageux de l'invention, les orifices de montage de la portion de paroi annulaire et les aubes, notamment leurs surfaces aérodynamiques, sont configurés de manière à permettre l'insertion des aubes au travers des orifices depuis l'intérieur du rotor en vue de leur montage.

Selon un mode avantageux de l'invention, la face extérieure de la portion de paroi annulaire comprend une cavité autour de chaque orifice de montage, apte à recevoir la première portion de la plateforme des aubes, la deuxième portion de la plateforme des aubes traverse ledit orifice, et des moyens de fixation, tels qu'un ou plusieurs joncs, coopèrent avec les moyens de rétention des plateformes des aubes et avec la surface intérieure de ladite portion de paroi, lesdits moyens étant préférentiellement disposés de manière annulaire.

### Avantages apportés

Les mesures de l'invention permettent de réaliser un assemblage avantageux des aubes au rotor d'une turbomachine. Cet assemblage présente en effet l'avantage qu'il permet aux aubes et au rotor d'être en des matériaux différents à tel point notamment qu'il n'est pas possible de réaliser des opérations de soudure entre les deux. L'assemblage présente également l'avantage qu'il est très léger. En effet, il est compatible avec un rotor réalisé sous forme de tambour, c'est-à-dire constitué essentiellement d'une paroi mince formant un voile général, par exemple en forme d'ogive ou de tonnelet, plus particulièrement pourvu de portions de paroi surélevées annulaires. Ces portions présentent le double avantage de rigidifier le tambour et de compenser la différence de hauteur nécessaire pour loger les viroles internes des redresseurs statoriques. Les aubes conformes à l'invention sont particulièrement adaptées à ce type de rotor. Elles exploitent en fait les portions de paroi surélevées destinées à recevoir les aubes en vue de leur fixation sans pour autant requérir d'ajout de matière ou de renfort.

### Brève description des dessins

La figure 1 est une vue en coupe partielle de la partie compresseur basse-pression d'une turbomachine axiale du type moteur à réaction, les aubes et le rotor étant conformes à un premier mode de réalisation de l'invention.

La figure 2 est une vue en coupe du rotor de la turbomachine de la figure 1, illustrant des variantes de fixation des aubes au rotor, conformément à un premier mode de réalisation de l'invention.

La figure 3 est une vue en perspective d'un exemple de réalisation d'aube selon le premier mode de réalisation de l'invention.

La figure 4 est une vue en coupe partielle d'un rotor de turbomachine axiale selon un deuxième mode de réalisation de l'invention.

La figure 5 est une vue en perspective d'une aube du rotor de la figure 4, conforme au deuxième mode de réalisation de l'invention.

La figure 6 est une vue du rotor aubagé de la figure 4 selon la coupe 6-6.

### Description des modes de réalisation

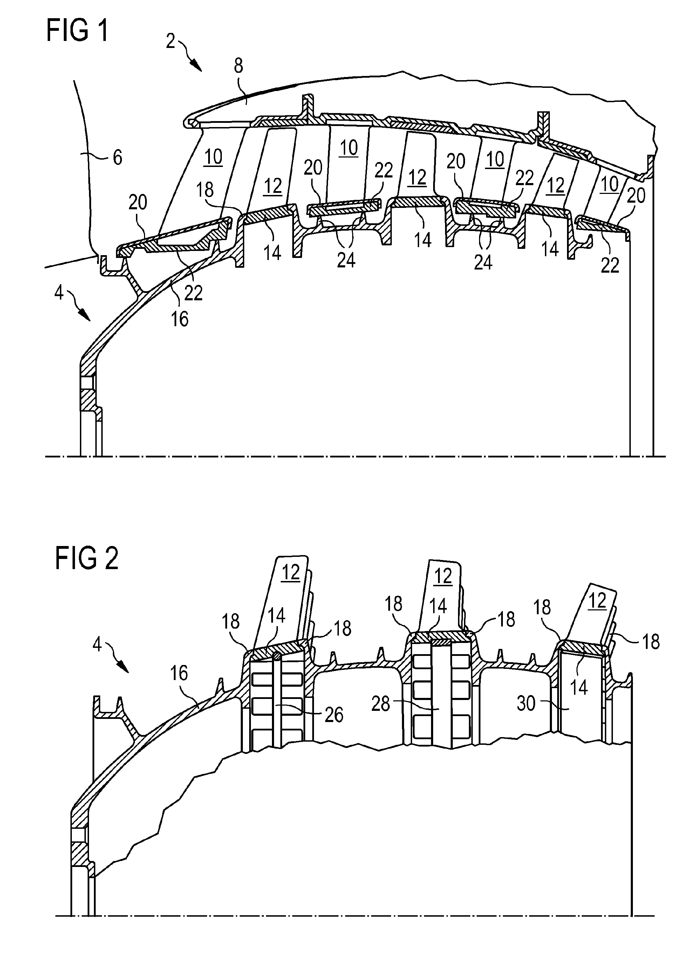

La figure 1 montre la partie avant d'une turbomachine axiale 2 du type moteur à réaction. On peut y observer le ventilateur d'entrée ou « fan » 6 monté sur le rotor 4. Directement en aval du fan 6 se trouve le bec de séparation 8 du flux d'air traversant le fan 6. Le flux en question est séparé en un flux primaire traversant les différents étages de compression du compresseur, et en un flux secondaire extérieur au flux primaire et au compresseur. Le compresseur comprend une série d'étages redresseurs constitués des aubes statoriques 10. Le rotor 4 supporte une série de rangées d'aubes rotoriques 12, chaque rangée d'aubes rotoriques formant avec la rangée d'aubes statoriques située directement en aval un étage de compression du compresseur.

Le rotor 4 est un tambour formé majoritairement par une paroi 16 symétrique en révolution par rapport à son axe de rotation. La paroi forme un voile correspondant à la forme générale du tambour en ogive. Elle comprend toutefois des portions surélevées 18 correspondant aux rangées d'implantation des aubes 12. Ces portions annulaires surélevées 18 permettent aux aubes qui y sont implantées de présenter leurs plateformes 14 délimitant le flux primaire traversant le compresseur le long de la paroi du rotor à hauteur des viroles internes 20 des aubes statoriques 10 voisines. En effet, les viroles 20 sont supportées par les aubes statoriques 12 et comprennent un matériau abradable 22 coopèrant de manière essentiellement étanche avec les léchettes 24 sur la paroi 16 du rotor 4.

Les portions de paroi surélevées 18 comprennent des ouvertures dans lesquelles les aubes 12 sont insérées et maintenues. Chaque aube 12 comprend une plateforme 14 apte à coopérer avec la surface intérieure ou interne de la portion de paroi 18 directement au bord de l'orifice en question. En effet, comme cela est visible à la figure 1, les plateformes 14 des aubes rotoriques 12 comprennent une portion inférieure formant un épaulement sur les bords amont et aval, ces épaulements venant en contact avec la surface intérieure de la paroi. Ils assurent une retenue mécanique des aubes dans une direction radiale. De tels épaulements peuvent être également présents sur les autres bords de la plateforme 14, c'est-à-dire sur les bords suivant une direction circonférentielle. Ils ne sont pas visibles sur la figure 1 étant donné qu'il s'agit d'une vue en coupe longitudinale du rotor.

Les aubes rotoriques 12 sont ainsi mises en place par insertion depuis l'intérieur du tambour, la partie aérodynamique de l'aube étant d'abord insérée dans l'orifice correspondant et la plateforme étant ensuite mise en place par insertion dans l'orifice avec mise en contact des portions de retenue contre la surface interne de la paroi du rotor. Les aubes rotoriques 12 peuvent être maintenues en place également par d'autres moyens tels que notamment des moyens de collage. En effet, la forme rétentive des plateformes 14 assure une retenue radiale des aubes dans le sens correspondant à celui des forces centrifuges. En rotation, ces efforts sont tellement importants qu'ils compensent les autres efforts exercés sur les aubes, tels que les efforts aérodynamiques et les efforts liés au poids propre de l'aube. A l'arrêt ou même à vitesse de rotation faible, les forces centrifuges sont nulles ou faibles et il est alors important que les aubes soient sécurisées sur le rotor par d'autres moyens. Les efforts auxquels sont soumises les aubes dans ces conditions sont cependant sensiblement inférieurs aux efforts liés aux forces centrifuges.

Il est également à noter que les plateformes des aubes et les orifices de la paroi 18 les recevant peuvent être dimensionnés pour qu'il y ait un serrage entre les deux. Dans ce cas, les bords de la plateforme et/ou ceux des orifices de la paroi 18 peuvent présenter des inclinaisons aptes à assurer un serrage lors du montage des aubes sur le rotor.

La figure 2 illustre des variantes de fixation des aubes au rotor, conformément à un premier mode de réalisation de l'invention tel qu'illustré à la figure 1. La figure 2 illustre uniquement le rotor en coupe.

La première rangée d'aubes rotoriques 12 est maintenue en place par un jonc de section circulaire 26 logé dans des gorges de forme correspondante sur les faces intérieures des plateformes 14. Le jonc est préférentiellement en matériau métallique élastique, tel que de l'acier à ressort. Il est configuré de manière à ce qu'il soit en état de contrainte une fois mis en place de manière à exercer des efforts sur les plateformes qui sont dirigés essentiellement radialement vers l'extérieur du rotor.

La deuxième rangée d'aubes rotoriques 12 est maintenue en place également par un jonc, mais cette fois-ci de section essentiellement rectangulaire 28. Il est également logé dans des rainures de forme correspondante formées sur les faces intérieures des plateformes. Il est également configuré pour être à l'état contraint une fois monté, en appui sur les plateformes.

La troisième rangée d'aubes rotoriques 12 est maintenue en place par un feuillard 30 s'étendant sur la majeure partie de la longueur des plateformes des aubes. Des rainures correspondantes ne sont pas nécessaires compte tenu de la largeur du feuillard.

Les moyens de fixation illustrés à la figure 2 sont des exemples et peuvent être combinés entre eux ou encore avec d'autres moyens tels que des moyens de collage et/ou de serrage.

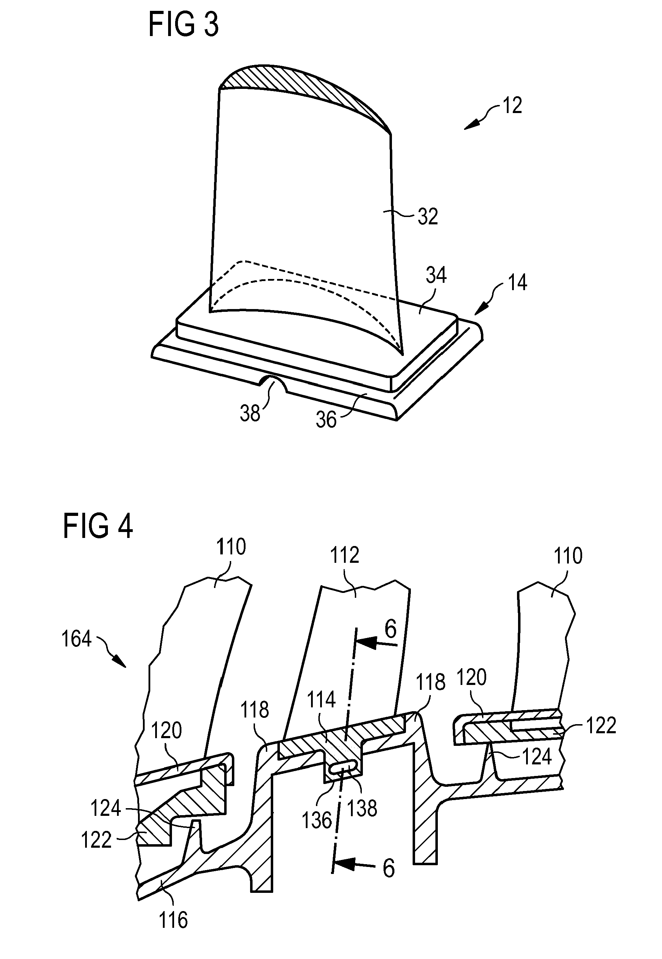

La figure 3 est une illustration en perspective d'une aube du premier mode de réalisation de l'invention des figures 1 et 2. L'aube rotorique 12 est constituée essentiellement d'une partie aérodynamique 32 et d'une plateforme 14. Cette dernière comprend une première portion supérieure 34 formant une surface de la veine fluide et contournant la partie aérodynamique 32. Cette surface peut être en forme de parallélogramme ou, plus particulièrement, en forme de rectangle. Son épaisseur correspond essentiellement à celle de la portion de paroi surélevée 18 (figures 1 et 2) du rotor, plus particulièrement à l'épaisseur de la paroi du rotor directement au bord de l'orifice recevant l'aube. La plateforme 14 comprend également une deuxième portion 36 située directement en-dessous de la première. La deuxième portion 36 peut couvrir l'étendue de la première portion et forme un épaulement à au moins deux bords opposés de la première portion 34. Dans le cas précis de la figure 3, la deuxième portion forme des épaulements sur les quatre bords de la première portion. Ces épaulements sont destinés à venir en contact avec la surface intérieure de la paroi, au bord de l'orifice recevant l'aube.

Une gorge de section circulaire 38 est formée transversalement sur la face intérieure de la plateforme 14, en l'occurrence sur la face intérieure de la deuxième portion 36. Cette gorge est destinée à loger un jonc circulaire tel que le jonc 26 présent sur la première rangée d'aube du rotor de la figure 2.

La deuxième portion de la plateforme des aubes peut prendre diverses formes pour autant qu'elle assure une retenue mécanique desdites aubes. En effet, au lieu de couvrir l'étendue de la première portion, elle peut se limiter à former des pattes en guide d'épaulement.

Les bords amont et aval de la deuxième portion 36 présentent des surfaces arrondies se conformant au profil de la surface intérieur de la paroi avec lequel elles viennent en contact.

La plateforme des aubes et la portion de paroi de rotor destinée à recevoir les aubes sont configurées de manière à ce que la surface de la première portion 34 formant la surface de la veine fluide affleure la surface extérieure de ladite portion de paroi.

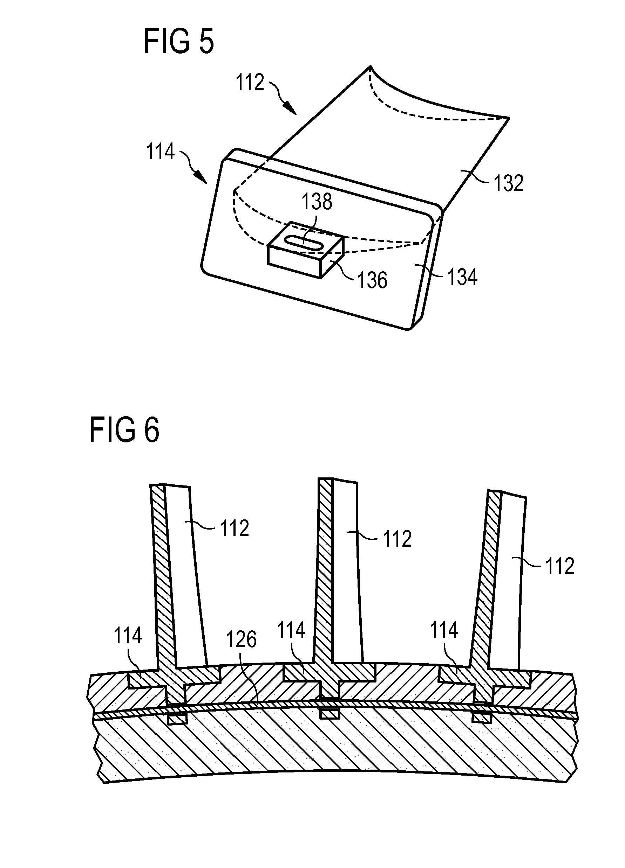

Les figures 4 à 6 illustrent un deuxième mode de réalisation de l'invention. La figure 4 est une vue en coupe partielle d'un rotor de turbomachine axiale, illustrant le montage d'une aube sur sa paroi. La figure 5 est une vue en perspective de l'aube présente à la figure 4. La figure 6 est une vue du rotor aubagé de la figure 4 selon la coupe 6-6.

Les numéros de référence des figures 1 à 3 du premier mode de réalisation sont utilisés également dans les figures 4 à 6 du deuxième mode de réalisation, et ce pour les éléments identiques ou correspondants ; ces numéros étant toutefois majorés de 100. Pour les éléments identiques, il est fait référence à la description du premier mode de réalisation.

Le rotor 104 illustré à la figure 4 est similaire à celui des figures 1 et 2. Il diffère toutefois par la portion de paroi surélevée 118 recevant les aubes 112. En effet, au lieu de présenter des orifices de section essentiellement constante, la portion de paroi 18 comprend ici une cavité dont la section correspond essentiellement à celle de la plateforme, et un orifice de taille inférieure à celle de la cavité.

La plateforme 114 de l'aube 112 comprend une première portion 134, similaire à la première portion 34 (voir figure 3) de la plateforme du premier mode de réalisation. Elle comprend également une deuxième portion 136 située directement en dessous de la première portion 134. La deuxième portion 136 s'étend depuis la face inférieure de la première portion de manière à faire saillie. Elle est destinée à passer au travers de l'orifice pratiqué dans la portion de paroi surélevée 118 en vue de la fixation de l'aube. Elle comprend un orifice 138 destiné à coopérer avec des moyens de fixation prenant appui sur la face intérieure de la portion de paroi 118. L'orifice 138 est orienté selon une direction circonférentielle du rotor. La figure 6 illustre un jonc 126 traversant les orifices de plusieurs plateformes d'aubes voisines d'une rangée d'aubes du rotor. Le jonc 126 peut s'étendre sur toute la circonférence, former plusieurs spires ou encore être segmenté de manière à ne coopérer qu'avec un nombre réduit d'aubes d'une rangée.

La deuxième portion en saillie depuis la face inférieure de la première portion peut prendre d'autres formes que celle illustrée aux figures 4 à 6. Il en est de même pour les moyens de rétention sur la deuxième portion. En effet, l'orifice peut avoir d'autres formes et notamment être orienté différemment. Il est également possible de prévoir plusieurs orifices sur la deuxième portion. Les moyens de rétention peuvent également être formés par un profil extérieur adéquat de la deuxième portion. Cette dernière peut présenter par exemple un profil en T avec lequel un jonc ou un verrou de forme correspondante peut coopérer de manière à assurer la retenue de l'aube sur le rotor.

Des moyens de serrage destinés à exercer un effort de traction sur la deuxième portion peuvent être prévus. Ils peuvent être intégrés dans les moyens de fixation (en l'occurrence le jonc 126 dans l'exemple des figures 4 à 6) coopérant avec les moyens de rétention (en l'occurrence l'orifice 138). En effet, les moyens de fixation peuvent présenter une pente au niveau d'au moins une surface de contact avec la deuxième portion de la plateforme de manière à exercer une traction sur ladite deuxième portion lors de la mise en place desdits moyens de fixation. Alternativement ou de manière complémentaire, les moyens de serrage peuvent agir au niveau de l'appui des moyens de fixation sur la face intérieure de la portion de paroi.

Les aubes de l'invention, c'est-à-dire notamment des deux modes de réalisation décrits ci-avant, peuvent être fabriquées dans un matériau différent de celui du rotor. En particulier, elles peuvent être fabriquées en matériau composite, notamment en matériau composite à matrice organique. Le rotor lui peut être fabriqué en matériau métallique tel que du titane. Le rotor aubagé peut ainsi être de construction très légère tout en présentant une fixation optimale des aubes, apte notamment à compenser d'éventuelles différences de dilatation entre les matériaux utilisés.

Dans le cadre d'aubes en matériau composite, elles peuvent également comprendre un ou plusieurs inserts en matériau métallique, notamment au niveau de la deuxième portion de la plateforme qui peut, à certaines zones, subir, notamment en fonctionnement de la turbomachine, des pressions importantes.

## Revendications

1. Aube rotorique (12 ; 112) de turbomachine axiale, comprenant :
- une plateforme (14 ; 114) de fixation au rotor (4 ; 104) ;
- deux surfaces aérodynamiques (32 ; 132) opposées l'une à l'autre et s'étendant depuis la plateforme (14 ; 114) suivant une direction principale de l'aube ;
la plateforme (14 ; 114) comprenant, suivant la direction principale de l'aube,
○ une première portion (34 ; 134) formant une surface de délimitation de la veine fluide et contournant les surfaces aérodynamiques (32 ; 132) ; et
○ une deuxième portion (36 ; 136) située sous la première portion (34 ; 134) par rapport aux surfaces aérodynamiques (32 ; 132) et destinée à la fixation de l'aube ;
**caractérisée en ce que**
la deuxième portion (36 ; 136) de la plateforme (14 ; 114) est configurée pour pouvoir coopérer avec la face intérieure d'une paroi (18 ; 118) du rotor (4 ; 104) située autour d'un orifice dudit rotor en vue de sa fixation.

2. Aube rotorique (12 ; 112) suivant la revendication 1, **caractérisée en ce que** la deuxième portion (36 ; 136) de la plateforme (14 ; 114) est configurée pour pouvoir coopérer directement et/ou indirectement avec des portions de la face intérieure de la paroi (18 ; 118) du rotor (4 ; 104) situées de part et d'autre, suivant une direction circonférentielle, de l'orifice.

3. Aube rotorique (12) suivant l'une des revendications 1 et 2, **caractérisée en ce que** la deuxième portion (36) forme un ou plusieurs épaulements débordant de la surface de la première portion (34).

4. Aube rotorique (12) suivant la revendication 3, **caractérisée en ce que** la deuxième portion (36) s'étend au moins essentiellement parallèlement à la première portion (34) et déborde de la surface de ladite portion afin de former un épaulement à chacun de ses bords.

5. Aube rotorique (112) suivant l'une des revendications 1 et 2, **caractérisée en ce que** la deuxième portion (136) fait saillie depuis la face inférieure de la première portion (134) et comprend un moyen de rétention, tel qu'un orifice (138) préférentiellement orienté selon la direction circonférentielle du rotor (104), apte à engager mécaniquement avec un moyen de fixation allongé (126) destiné à venir en contact avec la surface intérieure de la paroi (118).

6. Aube rotorique (112) suivant la revendication 5, **caractérisée en ce que** la surface inférieure de la première portion (134) contourne la deuxième portion (136) et forme une surface d'appui de la plateforme (114) sur une surface correspondante de la paroi (118) du rotor (104).

7. Rotor aubagé (4 ; 104) de turbomachine axiale, **caractérisé en ce que** les aubes (12 ; 112) sont conformes à l'une des revendications 1 à 6.

8. Rotor aubagé (4 ; 104) suivant la revendication 7, **caractérisé en ce qu'il** comprend une portion de paroi annulaire (18 ; 118) pourvue d'une rangée d'orifices de montage des aubes (12 ; 112), la portion de paroi étant préférentiellement d'un seul tenant.

9. Rotor aubagé (4 ; 104) suivant la revendication 8, **caractérisé en ce que** la structure du rotor est essentiellement constituée d'une paroi (16 ; 116) formant un voile circulaire, la portion de paroi annulaire (18 ; 118) étant surélevée par rapport au voile directement en amont et/ou en aval de ladite portion de paroi annulaire, ladite portion de paroi annulaire correspondant préférentiellement à une seule rangée d'aube (12 ; 112) et le voile comprenant préférentiellement au moins une nervure annulaire (24 ; 124) apte à coopérer de manière essentiellement étanche avec la surface intérieure (22 ; 122) d'une virole interne (20 ; 120) d'un étage d'aubes statoriques.

10. Rotor aubagé (4 ; 104) suivant la revendication 9, **caractérisé en ce que** la paroi (16 ; 116) comprend au moins une portion de liaison s'étendant majoritairement radialement entre la paroi formant le voile et la portion de paroi annulaire (18 ; 118).

11. Rotor aubagé (4) suivant l'une des revendications 8 à 10, **caractérisé en ce que** les aubes (12) sont conformes à l'une des revendications 3 et 4, la forme des orifices de montage de la portion de paroi annulaire (18) correspond à celle de la première portion (34) de la plateforme (14) des aubes (12), et les surfaces de délimitation de la veine fluide de ladite première portion (34) affleurent la surface extérieure de la portion de paroi annulaire (18).

12. Rotor aubagé (4) suivant la revendication 11, **caractérisé en ce qu'il** comprend des moyens de pression (26, 28, 30) agissant sur la face intérieure des plateformes (14) des aubes (12) en vue de les maintenir en place, lesdits moyens comprenant préférentiellement au moins un jonc (26, 28) et/ou un feuillard (30) disposé(s) de manière annulaire.

13. Rotor aubagé (4) suivant l'une des revendications 11 et 12, **caractérisé en ce qu'il** comprend des moyens d'adhésion, tels que de la colle, entre les épaulements (36) des plateformes (14) des aubes (12) et la paroi (18) du rotor.

14. Rotor aubagé (4) suivant l'une des revendications 11 à 13, **caractérisé en ce que** les orifices de montage de la portion de paroi annulaire (18) et les aubes (12), notamment leurs surfaces aérodynamiques (32), sont configurés de manière à permettre l'insertion des aubes (12) au travers des orifices depuis l'intérieur du rotor (4) en vue de leur montage.

15. Rotor aubagé (104) suivant l'une des revendications 8 à 10, **caractérisé en ce que** les aubes (112) sont conformes à l'une des revendications 5 et 6, la face extérieure de la portion de paroi annulaire (118) comprenant une cavité autour de chaque orifice de montage, apte à recevoir la première portion (134) de la plateforme (114) des aubes (112), la deuxième portion (136) de la plateforme (114) des aubes (112) traversant ledit orifice, des moyens de fixation, tels qu'un ou plusieurs joncs (126), coopérant avec les moyens de rétention (138) des plateformes (114) des aubes (112) et avec la surface intérieure de ladite portion de paroi (118), lesdits moyens étant préférentiellement disposés de manière annulaire.
